# EUROPÄISCHE PATENTANMELDUNG

(11) **EP 3 766 559 A1**
(43) Veröffentlichungstag der Anmeldung: **20.01.2021**
(21) Anmeldenummer: 20173647.7
(22) Anmeldetag: 08.05.2020
(51) Int. Cl.: B01D 19/00, A23L 2/76, B04C 3/00

(54) **DRALL- UND DROSSELKÖRPER FÜR EIN EINLAUFVENTIL EINES ENTGASUNGSBEHÄLTERS UND VERFAHREN ZUM EINLEITEN EINER FLÜSSIGKEIT IN EINEN ENTGASUNGSBEHÄLTER**

(30) Priorität: 17.07.2019 DE 102019119349
(71) Anmelder: Krones AG, 93073 Neutraubling (DE)
(72) Erfinder: Steiner, Hannes, 93073 Neutraubling (DE); Feilner, Roland, 93073 Neutraubling (DE); Florian, Justl, 93073 Neutraubling (DE)
(74) Vertreter: Grünecker Patent- und Rechtsanwälte PartG mbB

(57) **Zusammenfassung**

Beschrieben werden ein Drall- und Drosselkörper, ein damit ausgestattetes Einlaufventil für einen Entgasungsbehälter, ein entsprechender Entgasungsbehälter sowie ein Verfahren zum Einleiten einer Flüssigkeit, insbesondere Produktflüssigkeit in einen Entgasungsbehälter einer Getränkeherstellungsanlage. Demnach umfasst der Drall- und Drosselkörper einen Tragkörper und auf dessen Außenseite wendelförmig verlaufende Stege zur Strömungsleitung, um die am Drall- und Drosselkörper entlangströmende Produktflüssigkeit in Drall zu versetzen. Dadurch, dass ein zwischen benachbarten Stegen definierter Strömungsquerschnitt für die Produktflüssigkeit ausgehend von einem eingangsseitigen Anfangsbereich der Stege abnimmt und zu einem ausgangsseitigen Endbereich der Stege hin wieder zunimmt, kann ein Maximum der Strömungsgeschwindigkeit in einen Bereich stromaufwärts des ausgangsseitigen Endbereichs verlagert werden, um einem unerwünschten Aufschäumen der Produktflüssigkeit entgegenzuwirken und/oder den Arbeitsbereich des Drall- und Drosselkörpers für unterschiedliche Produktflüssigkeiten zu deren Entgasung zu optimieren.

## Beschreibung

Die Erfindung betrifft einen Drall- und Drosselkörper gemäß Oberbegriff des Anspruchs 1, ein damit ausgestattetes Einlaufventil, einen damit ausgestatteten Entgasungsbehälter sowie ein Verfahren gemäß Oberbegriff des unabhängigen Verfahrensanspruchs.

Ein gattungsgemäßer Drall- und Drosselkörper ist beispielsweise aus EP 2 140 920 B1 zur Verwendung in einem Einlaufventil einer Entgasungsvorrichtung bekannt. Demnach dient der Drall- und Drosselkörper bekanntermaßen dazu, eine eingangsseitig im Wesentlichen noch in Längsrichtung verlaufende Strömung einer Produktflüssigkeit in einem Ventilkanal in eine im Wesentlichen wendelförmige Tangentialströmung umzuwandeln. Die Tangentialströmung soll ferner am ausgangsseitigen Ende des Drall- und Drosselkörpers abreißen und vorzugsweise als Flüssigkeitsfilm an einer an den Ventilkanal anschließenden Innenwand des Entgasungsbehälters entlangfließen. Bekanntermaßen lässt sich dadurch die Oberfläche der Flüssigkeit für deren Entgasung auf geeignete Weise vergrößern.

Die Umwandlung der eingangsseitigen Längsströmung in eine ausgangsseitige Tangentialströmung erfolgt beim gattungsgemäßen Drall- und Drosselkörper mittels wendelförmiger Stege, die auf der Außenseite des Drall- und Drosselkörpers im Wesentlichen radial abstehen. Die Wendelsteigung nimmt in Strömungsrichtung ab, so dass sich dadurch der Strömungsquerschnitt im Ventilkanal verringert, wodurch ein nennenswerter statischer Druckabfall im Sinne einer Drossel verursacht wird, beispielsweise um einige hundert Millibar.

Zur Optimierung der tangentialen Strömungskomponente ist man bisher davon ausgegangen, dass die Wendelsteigung in Strömungsrichtung bis zum ausgangsseitigen Ende des Drall- und Drosselkörpers stetig abnehmen sollte. Man nahm insbesondere auch an, dass die folglich in Strömungsrichtung zunehmende Verengung des Strömungsquerschnitts zu einem geeigneten Druckabfall im flüssigen Produkt führt.

In der Praxis hat sich mittlerweile herausgestellt, dass man geeignete Flüssigkeitsfilme zwar prinzipiell mit dem gattungsgemäßen Drall- und Drosselkörper erzeugen kann. Jedoch sind die jeweiligen Arbeitsbereiche der damit ausgestatteten Einlaufventile hinsichtlich möglicher Durchsatzraten und der zulässigen Viskosität der Produktflüssigkeit vergleichsweise klein. Dies gilt umso mehr, wenn ein vorzeitiges Ausgasen und prinzipiell unerwünschtes Aufschäumen der Produktflüssigkeit im Bereich des Drall- und Drosselkörpers vermieden werden soll. Denn Letzteres behindert die Ausbildung eines für die Entgasung geeigneten Flüssigkeitsfilms.

Es besteht daher Bedarf für einen verbesserten Drall- und Drosselkörper für ein Einlaufventil eines Entgasungsbehälters, um wenigstens eines der oben genannten Probleme zu beseitigen oder zumindest abzumildern.

Die gestellte Aufgabe wird mit einem Drall- und Drosselkörper nach Anspruch 1, einem Einlaufventil nach Anspruch 8, einem Entgasungsbehälter nach Anspruch 9 und einem Verfahren nach Anspruch 10 gelöst.

Demnach ist der Drall- und Drosselkörper zum Einsatz in einem Einlaufventil zum Einleiten einer Produktflüssigkeit in einen Entgasungsbehälter einer Getränkeherstellungsanlage ausgebildet. Der Drall- und Drosselkörper umfasst einen Tragkörper und auf dessen Außenseite wendelförmig verlaufende Stege zur Strömungsleitung, um eine am Drall- und Drosselkörper entlangströmende Produktflüssigkeit in Drall zu versetzen. Ein zwischen jeweils benachbarten Stegen definierter Strömungsquerschnitt für die Produktflüssigkeit nimmt, in Längsrichtung des Drall- und Drosselkörpers gesehen, ausgehend von einem eingangsseitigen Anfangsbereich der Stege zunächst ab und nimmt dann zu einem ausgangsseitigen Endbereich der Stege hin wieder zu.

Da der Drall- und Drosselkörper für ein im Wesentlichen inkompressibles Fluid ausgelegt ist, nämlich für eine Produktflüssigkeit wie beispielsweise ein Getränk, folgt aus obigem Verlauf des Strömungsquerschnitts in Längsrichtung, dass die Produktflüssigkeit nicht mehr (wie bisher) im ausgangsseitigen Endbereich am schnellsten fließt, sondern in einem mittleren Bereich des Drall- und Drosselkörpers, also zwischen dem eingangsseitigen Anfangsbereich und dem ausgangsseitigen Endbereich.

Da der statische Druckabfall in der Produktflüssigkeit, in Längsrichtung gesehen, vom Anfangsbereich zum Endbereich zunimmt, fallen das Geschwindigkeitsmaximum der Produktflüssigkeit und das statische Druckminimum in der Produktflüssigkeit nicht mehr zusammen.

Somit kann die Gefahr eines vorzeitigen Ausgasens und unerwünschten Aufschäumens der Produktflüssigkeit im Endbereich und stromabwärts unmittelbar daran anschließend minimiert werden. Das heißt, das Geschwindigkeitsmaximum wird entgegen der Strömungsrichtung in einen Bereich mit relativ hohem statischen Überdruck verlegt und dadurch Schaumbildung in der am Drall- und Drosselkörper entlangströmenden Produktflüssigkeit vermieden oder zumindest reduziert. Gleichzeitig kann die tangentiale Strömungskomponente dem wendelförmigen Verlauf der Stege folgend zuverlässig erzeugt und bis zum ausgangsseitigen Ende des Drall- und Drosselkörpers aufrechterhalten werden.

Bezogen auf eine in Längsrichtung des Drall- und Drosselkörpers definierte Gesamtlänge der Stege wird das Geschwindigkeitsmaximum der Produktflüssigkeit dann vorzugsweise in der eingangsseitigen Hälfte der Gesamtlänge erzeugt.

Der Strömungsquerschnitt zwischen jeweils benachbarten Stegen kann als im Wesentlichen wannenförmiger Querschnitt eines wendelförmigen Strömungskanals verstanden werden. Der Strömungsquerschnitt wird nach innen von der Außenseite des Tragkörpers und seitlich durch zwei einander benachbarte Stege begrenzt.

Auf bekannte Weise sind dann umfänglich verteilt mehrere solche Strömungskanäle vorhanden, beispielsweise vier bis acht, die wendelförmig verschlungen nebeneinander verlaufen.

Nach außen hin, also vom Tragkörper weg, ist der jeweilige Strömungskanal des Drall- und Drosselkörpers vorzugsweise offen. Die Stege umfassen dann freie Enden, und gedachte Verbindungslinien zwischen den freien Enden benachbarter Stege begrenzen dann die jeweiligen Strömungsquerschnitte per Definition nach außen hin.

Der Drall- und Drosselkörper ist auf prinzipiell bekannte Weise passend zu einem zugeordneten Ventilkanal ausgebildet, sodass sich die freien Enden der Stege (nach dem Einbau) strömungstechnisch bis zu einer Innenwand des Ventilkanals erstrecken. Darunter ist zu verstehen, dass zwischen den freien Enden der Stege und dem Ventilkanal gegebenenfalls vorhandene Spalte strömungstechnisch keine Rolle spielen und die Produktflüssigkeit nicht nennenswert durch diese Spalte strömt.

Alternativ könnten die Strömungskanäle aber auch geschlossene Profile aufweisen, die gedachten Verbindungslinien also durch zusätzliche Außenwände der Strömungskanäle ersetzt werden. Anders gesagt, könnte die zugeordnete Innenwand des Ventilkanals ein Bestandteil des Drall- und Drosselkörpers sein, beispielsweise in Form einer außen auf den Stegen sitzenden Hülse.

In jedem Fall wird im Wesentlichen die gesamte Produktflüssigkeit durch geeigneten Vordruck von beispielsweise 2 bis 3 bar gezwungen, dem wendelförmigen Verlauf der Stege zu folgen. Daraus resultierende Drehimpulse und Fliehkräfte führen die Produktflüssigkeit auf prinzipiell bekannte Weise tangential an der Innenwand des zugeordneten Ventilkanals entlang.

Im eingangsseitigen Anfangsbereich können die Stege ausgehend von der Oberfläche des Tragkörpers eine insbesondere stetig zunehmende Überstandhöhe über den Tragkörper aufweisen, bis die Stege in der oben beschriebenen Weise ohne strömungstechnisch relevante Spalte an die Innenwand des zugeordneten Ventilkanals heranreichen und/oder diese berühren.

Am beschriebenen Drall- und Drosselkörper wird eine anfangs überwiegende Längsströmung und/oder turbulente Strömung der Produktflüssigkeit beim Entlangströmen an den Stegen in eine überwiegende Tangentialströmung umgewandelt. Darunter ist zu verstehen, dass der tangentiale Strömungsanteil der Produktflüssigkeit am ausgangsseitigen Endbereich des Drall- und Drosselkörpers größer ist als der Strömungsanteil in Längsrichtung.

Stromabwärts des Drall- und Drosselkörpers wird kein Drall mehr erzwungen, so dass der tangentiale Strömungsanteil beim Weiterströmen der Produktflüssigkeit in Form eines Flüssigkeitsfilms abnimmt und die Produktflüssigkeit schließlich der Schwerkraft folgend filmartig an einer anschließenden Behälterwand herabläuft.

Vorzugsweise umfasst der Drall- und Drosselkörper einen ersten Längsabschnitt, in dem die Wendelsteigung der Stege abnimmt und einen stromabwärts davon liegenden dritten Längsabschnitt, in dem die Wendelsteigung zunimmt.

Vorzugsweise umfasst der Drall- und Drosselkörper dann ferner einen dazwischenliegenden zweiten Längsabschnitt mit konstanter Wendelsteigung.

Durch einen derartigen Verlauf der Wendelsteigung lässt sich der Strömungsquerschnitt in einem vergleichsweise großen Ausmaß und gegebenenfalls stufenlos anpassen, um den Arbeitsbereich des Drall- und Drosselkörpers hinsichtlich der Produktviskosität, der bei der Strömungsumwandlung darin verursachten Scherbeanspruchung und dem Produktdurchsatz auf geeignete Weise einzustellen und insbesondere gegenüber bekannten Drall- und Drosselkörpern zu vergrößern.

Vorzugsweise weist der Strömungsquerschnitt des Drall- und Drosselkörpers am stromabwärts liegenden Ende des ersten Längsabschnitts ein Minimum auf. Die größten Strömungsgeschwindigkeiten treten dann in minimalem Längsabstand vom eingangsseitigen Anfangsbereich auf, also in einem Längsabschnitt, in dem der statische Druckabfall in der Produktflüssigkeit noch vergleichsweise gering ist. Der dort herrschende, entsprechend hohe statische Überdruck minimiert vorzeitiges Ausgasen und unerwünschtes Aufschäumen der Produktflüssigkeit am Drall- und Drosselköper.

Bezogen auf eine in der Längsrichtung definierte Gesamtlänge der Stege nimmt der erste Längsabschnitt beispielsweise 5 bis 40% der Gesamtlänge ein, vorzugsweise 10 bis 30% davon und besonders bevorzugt 15 bis 25% davon. Der zweite Längsabschnitt nimmt dann beispielsweise 5 bis 40% der Gesamtlänge ein, vorzugsweise 10 bis 30% davon und besonders bevorzugt 15 bis 25% davon. Der dritte Längsabschnitt nimmt dann beispielsweise 20 bis 65% der Gesamtlänge ein, vorzugsweise 30 bis 55% und besonders bevorzugt 40 bis 45% davon.

Es kann sein, dass - bezogen auf eine in Längsrichtung definierte Länge des Tragkörpers - der erste Längsabschnitt beispielsweise 5 bis 40% der Gesamtlänge einnimmt, vorzugsweise 10 bis 30% davon und besonders bevorzugt 15 bis 25% davon. Der zweite Längsabschnitt nimmt dann beispielsweise 5 bis 40% der Gesamtlänge ein, vorzugsweise 10 bis 30% davon und besonders bevorzugt 15 bis 25% davon. Der dritte Längsabschnitt nimmt dann beispielsweise 20 bis 65% der Gesamtlänge ein, vorzugsweise 30 bis 55% und besonders bevorzugt 40 bis 45% davon.

Diese Wertebereiche ermöglichen eine flexible Anpassung des Drall- und Drosselkörpers an Produktflüssigkeiten unterschiedlicher Viskosität, beispielsweise hervorgerufen durch die jeweilige Produktzusammensetzung und/oder Produkttemperatur, an Produktflüssigkeiten mit unterschiedlicher zulässiger Scherbeanspruchung, an unterschiedliche Produktdurchsätze und/oder an unterschiedliche eingangsseitige Druckbedingungen. Dabei lässt sich ein vorzeitiges Ausgasen und unerwünschtes Aufschäumen der Produktflüssigkeit im Bereich des Drall- und Drosselkörpers und/oder unmittelbar an diesen anschließend vermeiden.

Vorzugsweise ändert sich die Wendelsteigung im ersten Längsabschnitt mit einer stärkeren Längskrümmung als im dritten Abschnitt. Dadurch lässt sich die eingangsseitige Längsströmung der Produktflüssigkeit vergleichsweise zügig in eine überwiegende Tangentialströmung umwandeln und das Maximum der Strömungsgeschwindigkeit in der Produktflüssigkeit vergleichsweise nah am eingangsseitigen Anfangsbereich positionieren, also in einem Bereich mit vergleichsweise hohem statischem Druck.

Die demgegenüber sanftere Änderung der Wendelsteigung im dritten Längsabschnitt führt dazu, dass die Strömungsgeschwindigkeit passend zum in Strömungsrichtung zunehmenden Druckabfall wieder abnimmt. Folglich kann die im Wesentlichen bereits zuvor erzwungene Tangentialströmung unter Vermeidung von vorzeitigem Ausgasen und/oder unerwünschtem Aufschäumen stabilisiert werden.

Die resultierende Tangentialströmung der Produktflüssigkeit reißt am ausgangsseitigen Ende der Stege vom Drall- und Drosselkörper ab und geht dort vorzugsweise in einen möglichst blasenfreien Flüssigkeitsfilm über, der an der anschließenden Innenwand des Ventilkanals, einem anschließenden Flansch und/oder einer anschließenden Innenwand des zugeordneten Entgasungsbehälters entlangfließt.

Vorzugsweise variiert eine Überstandhöhe der Stege über den Tragkörper stromabwärts des ersten Längsabschnitts in der Längsrichtung und nimmt insbesondere in Strömungsrichtung zu. Mit der Überstandhöhe lässt sich unabhängig von der Wendelsteigung zusätzlich der Strömungsquerschnitt für die Produktflüssigkeit beeinflussen. Auch dadurch lässt sich der Arbeitsbereich des Drall- und Drosselkörpers hinsichtlich der Verwendung für Produktflüssigkeiten unterschiedlicher Viskosität und/oder Scherbeanspruchbarkeit sowie für unterschiedliche Durchsatzraten und/oder Druckbedingungen erweitern und auf geeignete Weise einstellen.

Vorzugsweise weist der Tragkörper zur Vergrößerung der Überstandhöhe einen in Strömungsrichtung abnehmenden Umfang und/oder Durchmesser auf. Somit lässt sich der Strömungsquerschnitt in Strömungsrichtung zunehmend vergrößern, ohne den Außenquerschnitt des Drall- und Drosselkörpers insgesamt im Bereich der Stege zu verändern.

Anders gesagt kann der Außenquerschnitt des Drall- und Drosselkörpers an einen zylindrischen Ventilkanal angepasst sein. Dies vereinfacht den Einsatz des Drall- und Drosselkörpers in herkömmlichen Ventilkanälen mit rotationssymmetrischen Querschnitten. Zudem können bestehende Einlaufventile von Entgasungsbehältern problemlos mit dem beschriebenen Drall- und Drosselkörper nachgerüstet werden.

Das beschriebene Einlaufventil ist zum Einleiten einer Produktflüssigkeit in einen Entgasungsbehälter einer Getränkeherstellungsanlage ausgebildet und umfasst zu diesem Zweck einen Ventilkanal zum Einleiten der Produktflüssigkeit in den Entgasungsbehälter und den im Ventilkanal angeordneten Drall- und Drosselkörper gemäß wenigstens einer der voranstehend beschriebenen Ausführungsformen.

Der beschriebene Entgasungsbehälter ist zum Entgasen einer Produktflüssigkeit in einer Getränkeherstellungsanlage ausgebildet und umfasst zu diesem Zweck das Einlaufventil und eine an den Ventilkanal insbesondere mittels eines beidseitig bündigen und in Längsrichtung gekrümmten Flansches anschließende Innenwand.

Die aus dem Einlaufventil im Wesentlichen mit einer Tangentialströmung austretende Produktflüssigkeit kann sich dann filmartig an der anschließenden Innenwand des Entgasungsbehälters ausbreiten und die Oberfläche der Produktflüssigkeit auf prinzipiell bekannte Weise für die beabsichtigte Entgasung vergrößern.

Ein bündig sowohl an den Ventilkanal als auch an die Innenwand des Entgasungsbehälters anschließender Flansch erleichtert den gleichmäßig filmartigen Abriss der Tangentialströmung der Produktflüssigkeit vom Drall- und Drosselkörper und ein ungehindertes Weiterfließen des so erzeugten Flüssigkeitsfilms vom Ventilkanal zur Innenwand des Entgasungsbehälters.

Die Getränkeherstellungsanlage kann über Rohre und ggf. weitere Anlagenbestandteile mit einer Getränkeabfüllanlage verbunden sein, in welcher das entgaste Getränk in Behälter abgefüllt werden kann. Die Getränkeabfüllanlage kann Teil der Getränkeherstellungsanlage sein.

Das beschriebene Verfahren dient zum Einleiten einer Flüssigkeit, insbesondere Produktflüssigkeit gegebenenfalls aber auch Reinigungs- und/oder Entkeimungsflüssigkeit, in einen Entgasungsbehälter einer Getränkeherstellungsanlage. Die Flüssigkeit strömt durch einen Ventilkanal eines Einlaufventils ein, strömt dabei an der Außenseite eines darin angeordneten Drall- und Drosselkörpers entlang und wird mittels an dessen Außenseite überstehender und wendelförmig verlaufender Stege in Drall um den Drall- und Drosselkörper versetzt. In Längsrichtung des Drall- und Drosselkörpers gesehen, nimmt die Strömungsgeschwindigkeit der Flüssigkeit, ausgehend von einem eingangsseitigen Anfangsbereich der Stege, zunächst zu und nimmt dann zu einem ausgangsseitigen Endbereich der Stege hin wieder ab.

Vorzugsweise wird das Maximum der Strömungsgeschwindigkeit in einem Längsabschnitt mit minimaler und insbesondere unmittelbar anschließend konstanter Wendelsteigung erzielt. Eine solcher Verlauf der Wendelsteigung ist besonders effizient, um das Maximum der Strömungsgeschwindigkeit in einem Längsabschnitt zu positionieren, in dem der statische Druck noch ausreichend hoch zur Unterdrückung vorzeitigen Ausgasens und unerwünschten Aufschäumens ist, also insbesondere möglichst nah am eingangsseitigen Anfangsabschnitt des Drall- und Drosselkörpers.

Vorzugsweise wird der Verlauf eines statischen Druckabfalls in der Flüssigkeit in Längsrichtung an die Siedelinie der Flüssigkeit angepasst. Dies erfolgt insbesondere mittels eines sich in Längsrichtung stetig ändernden Strömungsquerschnitts. Beispielsweise wird der Verlauf des statischen Druckabfalls entlang des Drall- und Drosselkörpers dann derart angepasst, dass der statische Druck in der Produktflüssigkeit im Bereich des Drall- und Drosselkörpers stets über den (beispielsweise von der Produkttemperatur abhängigen) Partialdrücken der in der Produktflüssigkeit gelösten Gase liegt. Beispielsweise kann eine Druckdifferenz zwischen dem in Längsrichtung jeweils herrschenden statischen Druck in der Produktflüssigkeit und den jeweiligen Partialdrücken soweit minimiert werden, dass ein vorzeitiges Ausgasen und/oder ein Aufschäumen der Produktflüssigkeit gerade noch zuverlässig vermieden wird, gleichzeitig aber eine Tangentialströmung bei effizienter Durchsatzrate und innerhalb der zulässigen Scherbeanspruchung der Produktflüssigkeit erzeugt wird.

Vorzugsweise vergrößert man den Strömungsquerschnitt, indem man die Wendelsteigung der Stege vergrößert und/oder die Überstandhöhe der Stege über einen Tragkörper des Drall- und Drosselkörpers vergrößert. Je nach Fließverhalten der Produktflüssigkeit lässt sich dadurch sowohl die Tangentialströmung als solche optimieren als auch der Arbeitsbereich des Drall- und Drosselkörpers sowie des zugehörigen Einlaufventils an vorliegende Produktviskositäten, erforderliche Durchsatzraten, praktikable Druckverhältnisse unter gleichzeitiger Vermeidung unerwünschter Schaumbildung vergleichsweise flexibel anpassen.

Die Flüssigkeit strömt dann vorzugsweise im Endbereich der Stege als wendelförmige Tangentialströmung am Ventilkanal entlang und fließt daran anschließend filmartig, insbesondere über einen bündig anschließenden Flansch, über eine Innenwand des Entgasungsbehälters. Dies ermöglicht eine vergleichsweise schonende und effiziente Entgasung von Produktflüssigkeiten, wie beispielsweise Fruchtsäften oder dergleichen.

Prinzipiell wäre es aber auch denkbar, am ausgangsseitigen Ende des Drall- und Drosselkörpers einen schirmartigen Flüssigkeitsfilm zu erzeugen, der sich nach dem Abreißen vom Drall- und Drosselkörper zunächst frei im Entgasungsbehälter ausbreitet, bis er auf eine seitliche Innenwand des Entgasungsbehälters trifft und dort schließlich als Flüssigkeitsfilm der Schwerkraft folgend herabläuft.

Vorzugsweise ist die Flüssigkeit ein Getränk oder eine Vorstufe davon, insbesondere ein Fruchtsaft oder eine fruchthaltige Komponente davon. Ferner wird bei der Entgasung dann ein Gasgehalt, vorzugsweise Sauerstoffgehalt in der Flüssigkeit im Entgasungsbehälter reduziert.

Derartige Getränke erfordern aufgrund ihrer Konsistenz und Inhaltsstoffe einen besonders großen Arbeitsbereich hinsichtlich Produktviskosität, Produkttemperatur und/oder zulässiger Scherbeanspruchung der Inhaltsstoffe. Der beschriebene Drall- und Drosselkörper und das damit ausgeführte Verfahren ermöglichen eine besonders flexible Anpassung an derartige Produktionsanforderungen.

Eine bevorzugte Ausführungsform der Erfindung ist zeichnerisch dargestellt. Es zeigen:
- Figur 1: einen Längsschnitt durch einen Drall- und Drosselkörper;
- Figur 2: den Drall- und Drosselkörper mit der Abwicklung eines Stegs und eines daran anschließenden Strömungskanals; und
- Figur 3: den in ein Einlaufventil eines Entgasungsbehälters eingebauten Drall- und Drosselkörper.

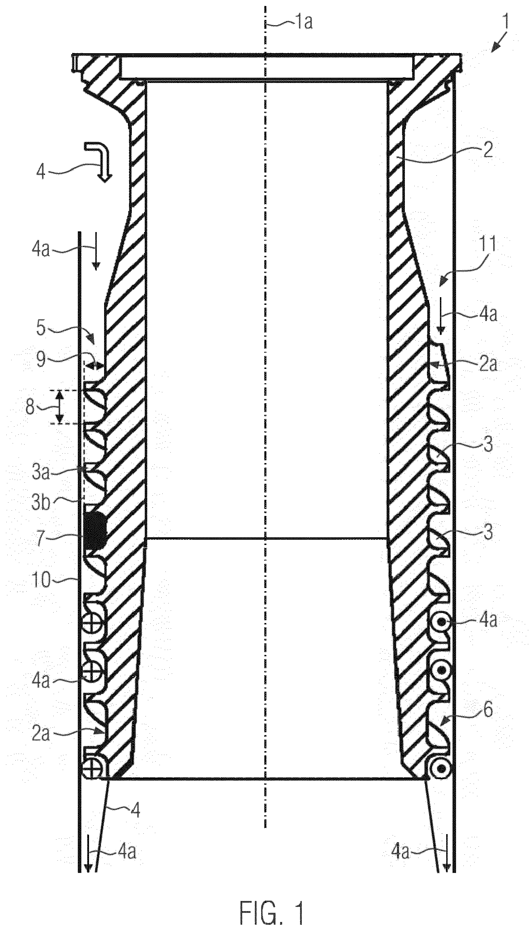

Wie die Figur 1 erkennen lässt, umfasst der Drall- und Drosselkörper 1 einen vorzugsweise rohrförmigen Tragkörper 2, an dessen Außenseite 2a mehrere umfänglich versetzte Stege 3, beispielsweise vier bis acht, wendelförmig um eine Längsachse 1a des Drall- und Drosselkörpers 1 verlaufen. Die Längsachse 1a gibt die genannte Längsrichtung / axiale Richtung vor.

Die Stege 3 dienen zur Strömungsleitung einer Produktflüssigkeit 4, deren Strömungsrichtung 4a im Sinne einer lokalen Hauptströmungsrichtung in der Figur 1 an mehreren Stellen schematisch angedeutet ist.

Demnach wandelt der Drall- und Drosselkörper 1 auf prinzipiell bekannte Weise eine eingangsseitige Längsströmung 5 (oder auch turbulente Strömung) der Produktflüssigkeit 4 in eine ausgangsseitige Tangentialströmung 6 der Produktflüssigkeit 4 um.

Die Tangentialströmung 6 wird beim Entlanglaufen der Produktflüssigkeit 4 an den stationären Stegen 3 durch einen stromaufwärts davon herrschenden Vordruck erzwungen. Der Vordruck kann durch Überdruck in einer zuführenden Produktleitung erzeugt werden, gegebenenfalls aber auch nur durch eine Produktflüssigkeitssäule über den Stegen 3.

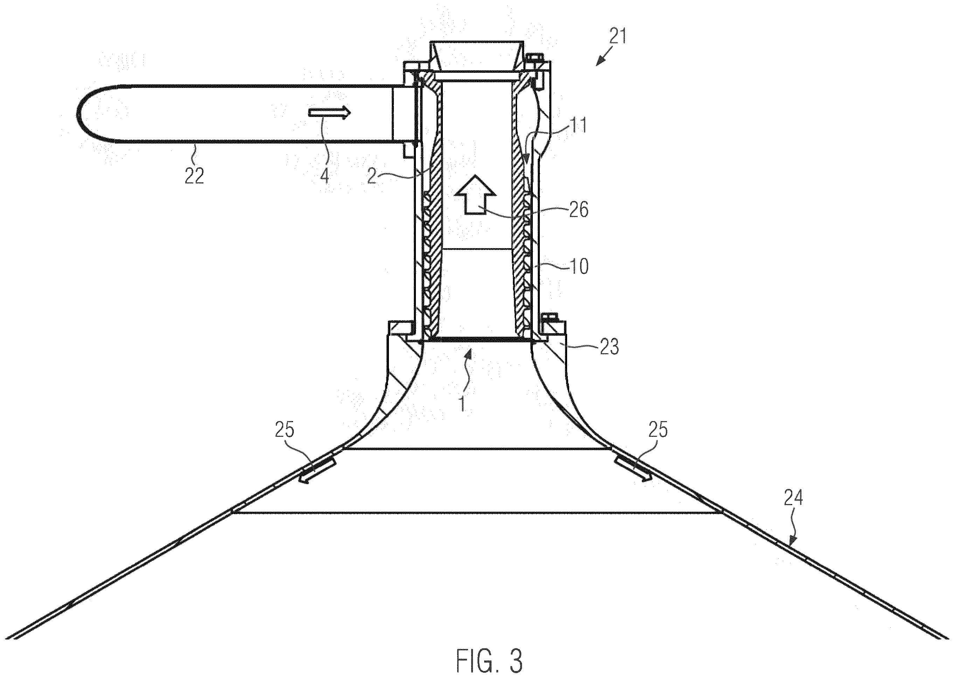

Der Drall- und Drosselkörper 1 kann hierzu auf prinzipiell bekannte Weise stationär in einem zugeordneten Einlaufventil 21 angeordnet werden, siehe beispielsweise die Figur 3.

Entlang des Drall- und Drosselkörpers 1 verlaufende Strömungsquerschnitte 7 für die Produktflüssigkeit 4 sind zwischen jeweils benachbarten Stegen 3 definiert. Dies ist in der Figur 1 beispielhaft zwischen zwei Stegen 3 durch eine schwarz gefüllte Fläche angedeutet.

Die Stege 3 stehen vom Tragkörper 2 nach außen ab und sind dabei vorzugsweise radial, also orthogonal zu der durch die Längsachse 1a vorgegebenen Längsrichtung ausgerichtet.

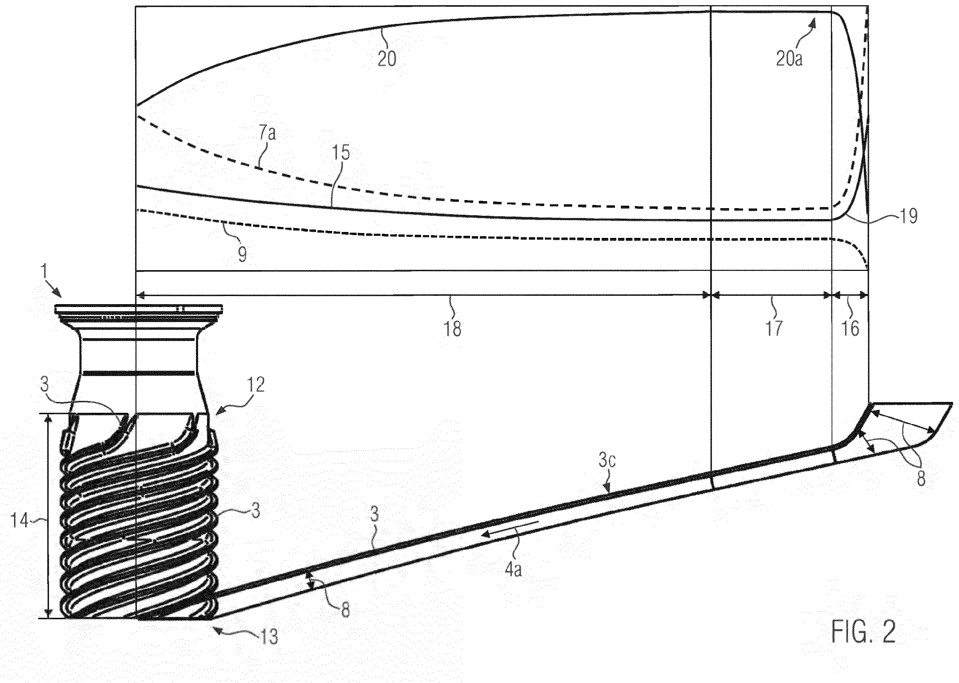

Die Stege 3 umfassen vorzugsweise freie Enden 3a, die in der Figur 1 der Anschaulichkeit halber durch eine gedachte Verbindungslinie 3b im Sinne einer Hüllkurve verbunden sind. Zwischen jeweils benachbarten Stegen 3 ist eine lichte Weite 8 der Strömungsquerschnitte 7 definiert. Prinzipiell könnte die lichte Weite 8 in Längsrichtung definiert sein (siehe Figur 1), vorzugsweise erfolgt dies aber orthogonal zur lokalen Strömungsrichtung 4a (siehe Figur 2).

Eine radiale Überstandhöhe 9 der Stege 3 bezüglich des Tragkörpers 2 ist als lokaler Abstand zwischen der Außenseite 2a des Tragkörpers 2 und den freien Enden 3a bzw. der zugehörigen Verbindungslinie 3b zu verstehen.

Die Verbindungslinie 3b dient der Bemaßung und strömungstechnischen Abgrenzung des Strömungsquerschnitts 7 nach außen hin für bevorzugte Ausführungsformen, bei denen der Strömungsquerschnitt 7 im nicht eingebauten Zustand des Drall- und Drosselkörpers 1 nach außen hin offen ist, also beispielsweise ein wannenförmiges Profil aufweist, wie dargestellt ist.

Im Arbeitsbetrieb wird der Strömungsquerschnitt 7 nach außen durch eine Wand 10 begrenzt, die vorzugsweise die Innenwand eines Ventilkanals 11 in einem zugeordneten Einlaufventil 21 ist, in das der Drall- und Drosselkörper 1 eingesetzt wird, siehe beispielsweise die Figur 3.

Prinzipiell könnte die Wand 10 aber stattdessen am Drall- und Drosselkörper 1 befestigt sein, diesen also beispielsweise hülsenartig umschließen, oder ein fester Bestandteil des Drall- und Drosselkörpers 1 sein. In diesen Fällen wäre die dargestellte Verbindungslinie 3b durch die entsprechend ausgebildete Wand 10 zu ersetzen, die in der Figur 1 der Anschaulichkeit halber mit übertriebenem Abstand zur Verbindungslinie 3b lediglich schematisch angedeutet ist.

Der Außenquerschnitt des Drall- und Drosselkörpers 1 ist vorzugsweise derart an einen zugeordneten Ventilkanal 11 angepasst, dass gegebenenfalls vorhandenes Spiel zwischen den freien Enden 3a und der Wand 10 des Ventilkanals 11 strömungstechnisch vernachlässigt werden kann, also dazwischen keine nennenswerte Längsströmung 5 zugelassen wird.

Idealerweise und zu Konstruktionszwecken entspricht der Verlauf der Verbindungslinie 3b dem Wandverlauf eines zugeordneten Ventilkanals 11. Somit ist der Drall- und Drosselkörper 1 auch im nicht eingebauten Zustand, also ohne umgebenden Ventilkanal 11, strukturell und strömungstechnisch definiert.

Die Figur 1 deutet ferner schematisch an, dass die Tangentialströmung 6 stromabwärts des Drall- und Drosselkörpers 1 zunehmend in eine filmartige Längsströmung oder dergleichen entlang der Wand 10 oder einer daran anschließenden Innenwand übergeht.

In jeweiliger Strömungsrichtung 4a und/oder in der Längsrichtung ändert sich die lichte Weite 8 des Strömungsquerschnitts 7 und/oder die radiale Überstandhöhe 9 der Stege 3 bzw. die daraus resultierende radiale Tiefe des Strömungsquerschnitts 7.

Die Figur 2 verdeutlicht dies anhand eines besonders günstigen Verlaufs der Stege 3 zwischen deren eingangsseitigem Anfangsbereich 12 und deren ausgangsseitigem Endbereich 13 am Drall- und Drosselkörper 1 über eine in Längsrichtung definierte Gesamtlänge 14 der Stege 3.

Zu diesem Zweck ist einer der Stege 3 in Form seiner auf die Längsachse 1a zu gesehenen Abwicklung 3c dargestellt. Diese lässt erkennen, dass sich die lichte Weite 8 des Strömungsquerschnitts 7 mit der Wendelsteigung 15 in Strömungsrichtung 4a und somit auch in axialer Richtung / Längsrichtung des Drall- und Drosselkörpers 1 ändert.

Der zugehörige Verlauf der Wendelsteigung 15 ist über der Abwicklung 3c des Steges 3 ebenso schematisch dargestellt wie der Flächeninhalt 7a des Strömungsquerschnitts 7 und der Verlauf der radialen Überstandhöhe 9 der Stege 3 über den Tragkörper 2.

Der Drall- und Drosselkörper 1 umfasst einen eingangsseitigen ersten Längsabschnitt 16, in dem die Wendelsteigung 15 der Stege 3 zunächst abnimmt, optional ferner einen daran anschließenden zweiten Längsabschnitt 17 mit konstanter Wendelsteigung 15, und einen ausgangsseitigen dritten Längsabschnitt 18 mit zunehmender Wendelsteigung 15.

Folglich nimmt auch die lichte Weite 8 des Strömungsquerschnitts 7 im ersten Längsabschnitt 16 entsprechend dem Verlauf der Wendelsteigung 15 zunächst ab, bleibt im optionalen zweiten Längsabschnitt 17 konstant und nimmt im dritten Längsabschnitt 18 wieder zu.

Die Wendelsteigung 15 ändert sich im ersten Längsabschnitt 16 vorzugsweise mit einer stärkeren Längskrümmung 19 als im dritten Längsabschnitt 18, in dem diese schwächer und dazu entgegengesetzt verläuft.

Vorteilhaft ist beispielsweise eine Änderung der Wendelsteigung 15 im dritten Längsabschnitt 18 derart, dass die lichte Weite 8 in Strömungsrichtung 4a um 10 bis 50% zunimmt, insbesondere um 20 bis 40%.

Der Flächeninhalt 7a des Strömungsquerschnitts 7 ergibt sich in prinzipiell bekannter Weise aus der jeweiligen lichten Weite 8 und der zugehörigen radialen Überstandhöhe 9.

In der Strömungsrichtung 4a der Produktflüssigkeit 4 gesehen, nimmt die Überstandhöhe 9 vorzugsweise nur im dritten Längsabschnitt 18 zu, insbesondere stetig bzw. stufenlos. Folglich nimmt dort der Flächeninhalt 7a des Strömungsquerschnitts 7 in Längsrichtung bzw. in Strömungsrichtung 4a noch stärker zu als die Wendelsteigung 15.

Je nach Formgebung des Strömungsquerschnitts 7 multiplizieren sich die Vergrößerung der lichten Weite 8 (aufgrund zunehmender Wendelsteigung 15) und die Vergrößerung der Überstandhöhe 9 im dritten Längsabschnitt 18 zumindest näherungsweise zu einer entsprechend ausgeprägten ausgangsseitigen Vergrößerung des Strömungsquerschnitts 7.

Die radiale Überstandhöhe 9 lässt sich vorteilhaft vergrößern, indem man den Außendurchmesser des Tragkörpers 2 zwischen den betroffenen Stegen 3 entsprechend verringert.

Vorteilhaft ist beispielsweise eine Vergrößerung der radialen Überstandhöhe 9 im dritten Längsabschnitt in Strömungsrichtung 4a um 5 bis 20%.

Änderungen der Wendelsteigung 15 und/oder Überstandhöhe 9 verlaufen in Längsrichtung vorzugsweise stetig, also ohne Knicke / Stufen in der Abwicklung 3c. Druckabfall im Bereich der Stege 3 lässt sich so minimieren, beispielsweise um hohe Durchsatzraten bei vergleichsweise geringer Scherbeanspruchung der Produktflüssigkeit 4 zu ermöglichen.

Schematisch angedeutet ist in der Figur 2 ferner eine im Wesentlichen zur Vergrößerung des Strömungsquerschnitts 7 invers verlaufende Reduzierung der Strömungsgeschwindigkeit 20 der Produktflüssigkeit 4. Demnach wird ein Maximum 20a der Strömungsgeschwindigkeit 20 in einem Bereich mit minimalem Flächeninhalt 7a des Strömungsquerschnitt 7 erreicht.

Vorzugsweise liegt das Maximum 20a in der eingangsseitigen Hälfte der Gesamtlänge 14 der Stege 3. Im Beispiel ist dies am stromabwärts gelegenen Ende des ersten Längsabschnitts 16 der Fall, ferner im anschließenden zweiten Längsabschnitt 17. Dort ist der Druckabfall gegenüber dem eingangsseitigen Vordruck noch relativ gering, sodass einem vorzeitigen Ausgasen und unerwünschter Schaumbildung in der Produktflüssigkeit 4 trotz der hohen Strömungsgeschwindigkeit besonders effektiv entgegengewirkt werden kann.

Allerdings ließen sich auch andere Verläufe (in Längsrichtung gesehen) der Wendelsteigung 15 und der Überstandhöhe 9 kombinieren, um einen gegebenenfalls besonders gut geeigneten Verlauf der Strömungsgeschwindigkeit 20 einzustellen und deren Maximum 20a in Längsrichtung je nach Prozessvorgaben vorteilhaft zu positionieren. Derartige Anpassungen können beispielsweise vorgenommen werden, um den Arbeitsbereich des Drall- und Drosselkörpers 1 und des zugehörigen Einlaufventils 21 für bestimmte Produktflüssigkeiten, Viskositätsbereiche, Durchsatzraten und/oder Druckverhältnisse am Drall- und Drosselkörper 1 einzustellen.

Die beschriebenen und in der Figur 2 über der Abwicklung 3c dargestellten Kurvenverläufe sind nicht größenmaßstäblich, sondern dienen lediglich der prinzipiellen Veranschaulichung.

Die Figur 3 zeigt den Drall- und Drosselkörper 1 im eingebauten Zustand. Demnach wird der Drall- und Drosselkörper 1 in ein Einlaufventil 21 eingesetzt. Die Produktflüssigkeit 4, die beispielsweise ein Fruchtsaft, eine Getränkekomponente mit Fruchtgehalt oder dergleichen ist, wird demnach über eine Rohrleitung 22 zugeführt und in den im Einlaufventil 21 ausgebildetem Ventilkanal 11 geleitet.

Ausgangsseitig schließt sich an den Drall- und Drosselkörper 1 vorzugsweise ein beispielhaft dargestellter Flansch 23 an, dessen Innenwand vorzugsweise bündig an die Wand 10 des Ventilkanals 11 und die Innenwand eines Entgasungsbehälters 24 anschließt. Dies ermöglicht ein gleichmäßiges Herablaufen der mittels Tangentialströmung aus dem Ventilkanal 11 austretenden Produktflüssigkeit 4 in Form eines Flüssigkeitsfilms 25.

Wie die Figur 3 ferner erkennen lässt, ist der Drall- und Drosselkörper 1 vorzugsweise rohrförmig ausgebildet, so dass zentral durch diesen aus dem Entgasungsbehälter 24 abzuführende Gase 26 abgezogen werden können. Dieses Vorgehen bei der Entgasung von Produktflüssigkeiten 4, wie beispielsweise Getränken und insbesondere Fruchtsäften oder dergleichen, ist an sich bekannt und daher nicht im Detail erläutert. Vielmehr soll die Figur 3 eine funktionsgerechte Anordnung und Anwendung des Drall- und Drosselkörpers 1 in einem zugeordneten Einlaufventil 21 eines Entgasungsbehälters 24 verdeutlichen.

Der Drall- und Drosselkörper 1 kann zur Entgasung von Getränken oder Vorstufen davon, wie beispielsweise Fruchtsäften, Konzentraten oder dergleichen, prinzipiell innerhalb der üblichen Wertebereiche für die einzelnen Prozessparameter betrieben werden.

Beispielsweise handelt es sich bei der Produktflüssigkeit um ein erwärmtes Getränk oder eine Vorstufe davon mit einer eingangsseitigen Produkttemperatur von beispielsweise 40 bis 60°C. Die Produktflüssigkeit 4 wird beispielsweise mit einem Überdruck von 2 bis 3 bar zugeführt. Ein typischer minimaler Druckabfall zwischen dem Anfangsbereich 12 der Stege 3 und deren Endbereich 13 liegt beispielsweise bei 200 bis 700 mbar oder dergleichen.

Allerdings ermöglicht der beschriebene Drall- und Drosselkörper 1 erstmalig breitere Arbeitsbereiche für einzelne Prozessparameter und/oder Kombinationen bestimmter Prozessparameter und somit einen flexibleren Einsatz für unterschiedliche Produktflüssigkeiten, variierender Durchsatzmenge, Produktviskosität oder dergleichen bei Unterdrückung vorzeitigen Ausgasens und unerwünschter Schaumbildung in der Produktflüssigkeit insbesondere im ausgangsseitigen Bereich des Drall- und Drosselkörpers 1.

Der beschriebene Drall- und Drosselkörper 1 eignet sich prinzipiell auch zum filmartigen Verteilen von Getränken und/oder deren Vorstufen in anderen Produktbehältern, beispielsweise in einer Maisch- und/oder Würzepfanne zum Strippen von Würze, ebenso an einem Füllventil zum Abfüllen von Getränken oder dergleichen in Flaschen. In beiden Fällen könnten Produktflüssigkeiten mittels am Drall- und Drosselkörper 1 entlang verlaufender Tangentialströmung in Behälter, also beispielsweise in eine Würzepfanne oder in eine Flasche, eingeleitet werden.

Mit Hilfe der beschriebenen Verläufe von Wendelsteigung 15 und/oder Überstandhöhe 9 in der Längsrichtung bzw. Strömungsrichtung 4a kann der Strömungsquerschnitt 7 am Drall- und Drosselkörper 1 flexibel optimiert werden, insbesondere um die Lage des Maximums 20a der Strömungsgeschwindigkeit 20 und den Verlauf des Druckabfalls im Längsrichtung aneinander anzupassen, beispielsweise je nach Produktviskosität, zulässigem Vordruck oder dergleichen.

Insbesondere kann der lokale statische Überdruck in der Produktflüssigkeit 4 entlang des Drall- und Drosselkörpers 1 gezielt um eine bestimmte Druckdifferenz oberhalb der Siedelinie der Produktflüssigkeit 4 gehalten werden. Somit kann vorzeitiges Ausgasen und unerwünschte Schaumbildung zuverlässiger vermieden werden. Dennoch sind relativ hohe Durchsatzmengen bei produktschonender Verarbeitung möglich.

Ferner können die Arbeitsbereiche zugeordneter Einlaufventile, Entgasungsbehälter und der damit ausgeführten Produktentgasung hinsichtlich zulässiger Prozessparameter vergrößert und/oder flexibler angepasst werden.

## Patentansprüche

1. Drall- und Drosselkörper (1) für ein Einlaufventil (21) zum Einleiten einer Produktflüssigkeit (4) in einen Entgasungsbehälter (24) einer Getränkeherstellungsanlage, umfassend einen Tragköper (2) und auf dessen Außenseite (2a) wendelförmig verlaufende Stege (3) zur Strömungsleitung, um die am Drall- und Drosselkörper entlangströmende Produktflüssigkeit in Drall zu versetzen, **dadurch gekennzeichnet, dass** ein zwischen benachbarten Stegen definierter Strömungsquerschnitt (7) für die Produktflüssigkeit, in Längsrichtung (1a) des Drall- und Drosselkörpers gesehen, ausgehend von einem eingangsseitigen Anfangsbereich (12) der Stege (3) abnimmt und zu einem ausgangsseitigen Endbereich (13) der Stege (3) hin wieder zunimmt.

2. Drall- und Drosselkörper nach Anspruch 1, umfassend einen ersten Längsabschnitt (16), in dem die Wendelsteigung (15) der Stege (3) abnimmt und einen stromabwärts davon liegenden dritten Längsabschnitt (18), in dem die Wendelsteigung (15) zunimmt, und insbesondere ferner mit einem dazwischenliegenden zweiten Längsabschnitt (17) mit konstanter Wendelsteigung (15).

3. Drall- und Drosselkörper nach Anspruch 2, wobei der Strömungsquerschnitt (7) am stromabwärts liegenden Ende des ersten Längsabschnitts (16) ein Minimum aufweist.

4. Drall- und Drosselkörper nach Anspruch 2 oder 3, wobei, bezogen auf eine in der Längsrichtung definierte Gesamtlänge (14) der Stege (3): der erste Längsabschnitt (16) 5-40% der Gesamtlänge (14) einnimmt, bevorzugt 10-30% davon und besonders bevorzugt 15-25% davon; der zweite Längsabschnitt (17) 5-40% der Gesamtlänge (14) einnimmt, bevorzugt 10-30% davon und besonders bevorzugt 15-25% davon; und/oder der dritte Längsabschnitt (18) 20-65% der Gesamtlänge (14) einnimmt, bevorzugt 30-55% davon und besonders bevorzugt 40-45% davon.

5. Drall- und Drosselkörper nach einem der Ansprüche 2 bis 4, wobei sich die Wendelsteigung (15) im ersten Längsabschnitt (16) mit einer stärkeren Längskrümmung (19) ändert als im dritten Längsabschnitt (18).

6. Drall- und Drosselkörper nach einem der Ansprüche 2 bis 5, wobei eine Überstandhöhe (9) der Stege (3) über den Tragkörper (2) stromabwärts des ersten Längsabschnitts (16) in der Längsrichtung variiert und insbesondere in Strömungsrichtung (4a) zunimmt.

7. Drall- und Drosselkörper nach Anspruch 6, wobei der Tragkörper (2) zur Vergrößerung der Überstandhöhe (9) einen in Strömungsrichtung (4a) abnehmenden Umfang aufweist.

8. Einlaufventil (21) zum Einleiten einer Produktflüssigkeit (4) in einen Entgasungsbehälter (24) einer Getränkeherstellungsanlage, umfassend einen Ventilkanal (11) zum Einleiten der Produktflüssigkeit in den Entgasungsbehälter und den im Ventilkanal angeordneten Drall- und Drosselkörper (1) nach wenigstens einem der vorigen Ansprüche.

9. Entgasungsbehälter (24) zum Entgasen einer Produktflüssigkeit (4) in einer Getränkeherstellungsanlage, umfassend das Einlaufventil (21) nach Anspruch 8 und eine an den Ventilkanal (11) insbesondere mittels eines beidseitig bündigen und in Längsrichtung gekrümmten Flansches (23) anschließende Innenwand.

10. Verfahren zum Einleiten einer Flüssigkeit, insbesondere Produktflüssigkeit (4), in einen Entgasungsbehälter (24) einer Getränkeherstellungsanlage, wobei die Flüssigkeit durch einen Ventilkanal (11) einströmt, dabei an der Außenseite eines darin angeordneten Drall- und Drosselkörpers (1) entlangströmt und mittels an dessen Außenseite überstehender und wendelförmig verlaufender Stege (3) in Drall um den Drall- und Drosselkörper versetzt wird, **dadurch gekennzeichnet, dass** die Strömungsgeschwindigkeit (20) der Flüssigkeit, in Längsrichtung des Drall- und Drosselkörpers gesehen, ausgehend von einem eingangsseitigen Anfangsbereich (12) der Stege (3) zunächst zunimmt und dann zu einem ausgangsseitigen Endbereich (13) der Stege (3) hin wieder abnimmt.

11. Verfahren nach Anspruch 10, wobei ein Maximum (20a) der Strömungsgeschwindigkeit (20) in einem Längsabschnitt mit minimaler und insbesondere konstanter Wendelsteigung (15) erzielt wird.

12. Verfahren nach Anspruch 10 oder 11, wobei der Verlauf eines statischen Druckabfalls in der Flüssigkeit in der Längsrichtung an die Siedelinie der Flüssigkeit angepasst wird, insbesondere mittels eines sich in Längsrichtung stetig ändernden Strömungsquerschnitts (7) zwischen den Stegen (3).

13. Verfahren nach Anspruch 12, wobei man den Strömungsquerschnitt (7) vergrößert, indem man die Wendelsteigung (15) der Stege (3) vergrößert und/oder die Überstandhöhe (9) der Stege über einen Tragkörper (2) des Drall- und Drosselkörpers (1) vergrößert.

14. Verfahren nach einem der Ansprüche 10 bis 13, wobei die Flüssigkeit im ausgangsseitigen Endbereich (13) der Stege (3) als wendelförmige Tangentialströmung (6) am Ventilkanal (11) entlangströmt und daran anschließend filmartig, insbesondere über einen bündig anschließenden Flansch (23), über eine Innenwand des Entgasungsbehälters (24) fließt.

15. Verfahren nach einem der Ansprüche 10 bis 14, wobei die Flüssigkeit ein Getränk oder eine Vorstufe davon ist, insbesondere ein Fruchtsaft.
